# EUROPEAN PATENT APPLICATION

(11) **EP 4 553 994 A1**
(43) Date of publication of application: **14.05.2025**
(21) Application number: 22957656.6
(22) Date of filing: 06.09.2022
(51) Int. Cl.: H01M 50/569, H01M 50/543, H01M 50/249

(54) **CONNECTION TERMINAL, BATTERY AND ELECTRIC DEVICE**

(71) Applicant: Contemporary Amperex Technology Co., Limited, Ningde, Fujian 352100 (CN)
(72) Inventor: GAN, Weifeng, Ningde, Fujian 352100 (CN); LIN, Yaowei, Ningde, Fujian 352100 (CN); LIU, Shaozhong, Ningde, Fujian 352100 (CN); WANG, Yu, Ningde, Fujian 352100 (CN); CHEN, Zhiming, Ningde, Fujian 352100 (CN)
(74) Representative: Ran, Handong
(86) International application number: PCT/CN2022/117216
(87) International publication number: WO 2024/050682

(57) **Abstract**

Provided in the embodiments of the present application are a connection terminal, a battery, and an electric device. The connection terminal is used to connect a sampling circuit and a busbar, and comprises: a first connecting portion comprising an engagement structure, the engagement structure being used to engage and connect with the busbar; and a second connecting portion connected to the first connecting portion, the second connecting portion being electrically connected to the sampling circuit. The technical solution of the present application enables a sampling module to be replaced conveniently after a battery module is assembled and formed, thereby improving the assembly efficiency of a battery.

## Description

### TECHNICAL FIELD

The present application relates to the technical field of batteries, and in particular, to a connecting terminal, a battery, and an electrical device.

### BACKGROUND

With the increasing severity of environmental pollution, the new energy industry is receiving more and more attention from people. In the new energy industry, the battery technology is an important factor for its development.

In the development process of battery technology, how to improve the assembly efficiency of batteries is an urgent problem that needs to be addressed in battery technology.

### SUMMARY OF THE INVENTION

In view of the above problem, the embodiments of the present application provide a connecting terminal, a battery, and an electrical device, which allow for convenient assembly and disassembly of the sampling module after the battery module is assembled and formed, thereby improving the assembly efficiency of the battery.

In a first aspect, there is provided a connecting terminal for connecting a sampling circuit and a busbar, including: a first connecting portion including a snap-fit structure, the snap-fit structure being used for snap-fit connection with the busbar; and a second connecting portion connected to the first connecting portion, the second connecting portion being electrically connected to the sampling circuit.

In the embodiments of the present application, a connecting terminal for connecting a sampling circuit and a busbar includes a first connecting portion and a second connecting portion; furthermore, the first connecting portion includes a snap-fit structure, where the first connecting portion is snap-fit connected to the busbar through the snap-fit structure, and the second connecting portion is connected to the first connecting portion and is electrically connected to the sampling circuit. By providing a snap-fit structure on the first connecting portion of the connecting terminal, and connecting the first connecting portion to the busbar through the snap-fit structure, the sampling circuit is connected to the busbar. This connection method is convenient for assembly and disassembly, which is beneficial to improving the battery assembly efficiency. Additionally, when the sampling circuit malfunctions and needs to be replaced, it can be replaced by simply pulling the connecting terminal out of the busbar, thereby avoiding waste of battery modules and thus improving the utilization rate of the battery modules.

**In** a possible implementation, the snap-fit structure includes a first main body portion and first bending portions on both sides of the first main body portion, the first bending portions on both sides being bent toward the first main body portion to form a snap-fit groove, with the snap-fit groove being used to snap-fit with the busbar.

**In** the embodiment of the present application, the first connecting portion uses a snap-fit structure to successfully connect the connecting terminal to the busbar. The snap-fit structure includes a first main body portion and first bending portions, where the first bending portions are respectively arranged on both sides of the first main body portion, the first bending portions on both sides being bent toward the first main body portion to form a snap-fit groove to snap-fit with the busbar. By providing a first main body portion and first bending portions on both sides of the first main body portion, and bending the first bending portions on both sides toward the first main body portion to form a snap-fit groove, where the snap-fit groove can snap-fit with the busbar, the connecting terminal is successfully connected to the busbar.

In a possible implementation, the snap-fit structure further includes two second bending portions respectively connected to the first bending portions on both sides, the second bending portions being bent inwardly toward the snap-fit groove and bent toward the first bending portions to form first abutting portions, where the first abutting portions are used to abut against a surface of the busbar that faces away from the first main body portion.

In the embodiments of the present application, the first main body portion and the first bending portions located on both sides of the first main body portion form a snap-fit groove to snap-fit with the busbar. The snap-fit structure further includes two second bending portions, the two second bending portions being bent toward the first bending portions to form first abutting portions, where the first abutting portions abut against a surface of the busbar that faces away from the first main body portion, thereby providing elastic support to the busbar. This can enhance the securing effect of the busbar with the first connecting portion.

In a possible implementation, a second abutting portion is provided on the first main body portion, the second abutting portion protruding from the first main body portion and the second abutting portion being used to abut against a surface of the busbar that is close to the first main body portion.

In the embodiments of the present application, the second bending portions on each side of the first bending portions are bent toward the two respective first bending portions to form the first abutting portions to abut against the surface of the busbar that is away from the first main body portion. The second abutting portion is provided on the first main body portion, the second abutting portion protruding from the first main body portion and abutting against the surface of the busbar that is close to the first main body portion. In this way, the first abutting portion and the second abutting portion cooperate to stably secure the busbar within the snap-fit groove, even during the transportation of the battery.

In a possible implementation, in a first direction, the distance between the first abutting portion and the second abutting portion is 50% to 90% of the thickness of the busbar, the first direction being perpendicular to a plane in which the first main body portion is located.

In the embodiments of the present application, the snap-fit groove is used to snap-fit the busbar, with the first abutting portions and the second abutting portion abutting against two different surfaces of the busbar to achieve securing of the busbar. Additionally, by setting the distance between the first abutting portion and the second abutting portion to be 50% to 90% of the thickness of the busbar, the space between the first abutting portion and the second abutting portion that is used to accommodate the busbar is smaller than the busbar, so that when the busbar is snapped into the snap-fit groove, a preload force is applied to the busbar, thereby achieving a stable connection between the busbar and the connecting terminal.

In a possible implementation manner, the second abutting portion is located at the middle of the first main body portion.

In the embodiments of the present application, the first abutting portions are formed by the second bending portions on both sides being bent toward the two respective first bending portions, which means that there are two first abutting portions. By positioning the second abutting portion at the middle of the first main body portion, the second abutting portion located at the middle of the first main body portion cooperates with the two first abutting portions, thereby achieving balanced securing of the entire busbar.

In a possible implementation, in the first direction, the second abutting portion protrudes from the first main body portion by 0.5 to 1 mm.

In the embodiments of the present application, both the first abutting portions and the second abutting portion abut against the busbar to achieve elastic securing of the busbar. As the protrusion height of the second abutting portion increases, the difficulty in manufacturing the second abutting portion also increases. By setting the height of the protrusion of the second abutting portion from the first main body portion to 0.5 to 1 mm, the second abutting portion not only provides a good elastic securing function but also has relatively low manufacturing difficulty.

In a possible implementation, when the busbar is snap-fitted with the snap-fit groove, the first bending portions are snapped into openings of the busbar.

In the embodiments of the present application, the first abutting portions and the second abutting portion jointly secure the busbar snapped into the snap-fit groove. Additionally, when snap-fitting the busbar with the snap-fit groove, by snapping the first bending portions into the openings of the busbar, the first connecting portion and the busbar are snap-fitted and secured with each other, thereby achieving a more secure connection between the two.

In a possible implementation, the second connecting portion includes a second main body portion and a crimping portion, the second main body portion being connected to the first main body portion, and the crimping portion being used for electrical connection with the sampling circuit.

In the embodiments of the present application, in order to achieve the connection between the sampling circuit and the busbar, one end of the connecting terminal, namely the first connecting portion, is connected to the busbar, while the other end needs to be connected to the sampling circuit. By having the second connecting portion include a second main body portion and a crimping portion, where the second main body portion is connected to the first main body portion, making the connecting terminal a unified whole; and the crimping portion is used for electrical connection with the sampling circuit, the sampling circuit is successfully connected to the busbar.

In a possible implementation, the crimping portion includes first sub-crimping portions, the first sub-crimping portion including a joint portion and a tip portion, where the tip portion is connected to the second main body portion through the joint portion, and the tip portion is used to pierce the sampling circuit and bend to electrically connect with the sampling circuit.

In the embodiments of the present application, the crimping portion is used for electrical connection with the sampling circuit, and the crimping portion includes first sub-crimping portions. When the sampling circuit has a relatively soft texture, the tip portion in the first sub-crimping portion can pierce the sampling circuit and then bend on the sampling circuit to be fixed and electrically connected with the sampling circuit. By providing first sub-crimping portions within the crimping portion and making the first sub-crimping portion include a joint portion and a tip portion, where the joint portion is used to connect the tip portion and the second main body portion, and the tip portion is used to be pierce-connected to the sampling circuit, the electrical connection between the connecting terminal and the sampling circuit is achieved.

In a possible implementation, the first sub-crimping portions are located on both sides of the second main body portion.

In the embodiments of the present application, the first sub-crimping portions achieve a fixed connection with the sampling circuit by piercing the sampling circuit and then bending. By positioning the first sub-crimping portions on both sides of the second main body portion, the fixed connection between the first sub-crimping portions and the sampling circuit can be strengthened.

In a possible implementation, the number of the first sub-crimping portions is not less than 3.

In the embodiment of the present application, in order to enhance the connection effect between the first sub-crimping portions and the sampling circuit, the first sub-crimping portions are located on both sides of the second main body portion. By increasing the number of the first sub-crimping portions so that the number of the first sub-crimping portions is not less than 3, the connection effect between the first sub-crimping portions and the sampling circuit can be further enhanced.

In a possible implementation, the thickness of the tip portion is 0.08 mm to 0.12 mm, and the length is 0.15 to 0.2 mm.

In the embodiments of the present application, the tip portion of the first sub-crimping portion is pierce-connected to the sampling circuit. When the tip portion pierces the sampling circuit, the tip portion bends inside the sampling circuit and is fixed within it. Therefore, if the tip portion is too thick or too thin, its crimping capability on the sampling circuit will be poor. If the tip portion is too long, the connection effect between it and the second main body portion will also deteriorate. Therefore, by limiting the thickness and length of the tip portion to 0.08 mm to 0.12 mm and 0.15 to 0.2 mm, respectively, on the one hand, the connection effect between the tip portion and the joint portion can be enhanced, and on the other hand, a reliable pierce-connection between the tip portion and the sampling circuit can be ensured.

In a possible implementation, the thickness of the joint portion is 0.15 to 0.2 mm.

In the embodiments of the present application, the joint portion connects the tip portion and the second main body portion. Therefore, the joint portion only needs to have a certain hardness to achieve the connection effect. By maintaining the thickness of the joint portion at 0.15 to 0.2 mm, it can ensure that the joint portion can effectively connect the tip portion and the second main body portion, while also preventing waste of materials.

In a possible implementation, in the first direction, the distance between the tip portion after being bent and the second main body portion is 0.3 to 0.5 mm, the first direction being perpendicular to a plane in which the first main body portion is located.

In the embodiments of the present application, the tip portion is pierce-connected to the sampling circuit and bends within the sampling circuit to achieve a long-term fixed connection. By maintaining the distance between the tip portion after being bent and the second main body portion at 0.3 to 0.5 mm, the tip portion has a certain cushioning pressure. In this way, even during transportation, the stable connection between the tip portion and the sampling circuit can be ensured.

In a possible implementation, the crimping portion further includes second sub-crimping portions, the second sub-crimping portions being connected to the second main body portion and being used for crimping a wiring harness of the sampling circuit.

In the embodiments of the present application, when the sampling circuit is made of a rigid material, by providing the second sub-crimping portions, with one end of the second sub-crimping portion being connected to the second main body portion and crimping the wire harness of the sampling circuit, the connection between the connecting terminal and the sampling circuit can be achieved.

In a possible implementation, the number of the second sub-crimping portions is two, the two second sub-crimping portions being located on both sides of the second main body portion, and the two second sub-crimping portions being bent toward the second main body portion to crimp the wiring harness of the sampling circuit.

In the embodiments of the present application, the second sub-crimping portions are used to crimp the wire harness of the sampling circuit to achieve electrical connection with the sampling circuit. By providing two second sub-crimping portions and positioning the two second sub-crimping portions on both sides of the second main body portion, the connection effect between the second sub-crimping portions and the sampling circuit can be enhanced.

In a possible implementation, in a second direction, the size of the connecting terminal is 10 to 50 mm, the second direction being parallel to a plane in which the first main body portion is located.

In the embodiments of the present application, by maintaining the size of the connecting terminal in the second direction between 10 and 50 mm, the connecting terminal can achieve the effect of connecting the sampling circuit and the busbar while avoiding excessively high manufacturing costs.

In a possible implementation, in a second direction, the size of the first bending portion is 5 to 20 mm, the second direction being parallel to a plane in which the first main body portion is located.

In the embodiments of the present application, by maintaining the size of the first bending portion in the second direction between 5 and 20 mm, a sufficiently long snap-fit groove can be provided to snap-fit the busbar, while avoiding excessively high manufacturing costs.

In a possible implementation, in a second direction, the size of the joint portion is 1 to 5 mm, the second direction being parallel to a plane in which the first main body portion is located.

In the embodiments of the present application, by maintaining the size of the joint portion in the second direction between 1 and 5 mm, the joint portion can achieve the effect of connecting the second main body portion and the tip portion while avoiding excessively high manufacturing costs.

In a possible implementation, in a second direction, the size of the second sub-crimping portion is 3 to 10 mm, the second direction being parallel to a plane in which the first main body portion is located.

In the embodiments of the present application, by maintaining the size of the second sub-crimping portion in the second direction between 3 and 10 mm, excessively high manufacturing costs can be avoided.

In a possible implementation, the material of the connecting terminal is metal.

In the embodiments of the present application, for the connecting terminal made of metal, by adjusting the thickness, the connecting terminal can achieve both a certain strength and a certain elasticity.

In a second aspect, a battery is provided, including: a battery cell; a busbar; a sampling circuit; and a connecting terminal according to any one of the above embodiments, where the busbar connects multiple battery cells, and the connecting terminal connects the busbar and the sampling circuit.

In a third aspect, an electrical device is provided, including the battery of the above embodiment, the battery being used to provide electrical energy.

### BRIEF DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
Fig. 1 is a schematic structural diagram of a vehicle according to an embodiment of the present application;
Fig. 2 is a schematic exploded structural diagram of a battery according to an embodiment of the present application;
Fig. 3 is a schematic structural diagram of a battery according to another embodiment of the present application;
Fig. 4 is a schematic diagram of a battery cell according to an embodiment of the present application;
Fig. 5 is a schematic structural diagram of a connecting terminal according to an embodiment of the present application;
Fig. 6 is a schematic structural diagram of a connecting terminal according to another embodiment of the present application;
Fig. 7 is a schematic diagram of partial details corresponding to position A in Fig. 5;
Fig. 8 is a schematic diagram of partial details corresponding to position B in Fig. 5;
Fig. 9 is a schematic structural diagram of a connecting terminal according to a further embodiment of the present application; and
Fig. 10 is a schematic structural diagram of a connecting terminal according to a further embodiment of the present application.

Description of reference numerals:
vehicle 1, battery 2, battery cell 3, busbar 4, sampling circuit 5, connecting terminal 6;
controller 11, motor 12, box 20, battery module 30, electrode assembly 31, shell 32, electrode terminal 33, connecting member 34, pressure relief mechanism 35, first portion 41, opening 42, first connecting portion 61, second connecting portion 62, snap-fit groove 63;
first box body portion 201, second box body portion 202, accommodating space 203, case 321, positive electrode terminal 331, negative electrode terminal 332, end cover 361, first main body portion 611, first bending portion 612, second bending portion 613, first abutting portion 614, second abutting portion 615, second main body portion 621, crimping portion 622, first sub-crimping portion 623, second sub-crimping portion 624;
joint portion 6231, tip portion 6232, first direction X, second direction Y.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "multiple" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "multiple" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mount", "interconnect", "connect" and "fix" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

In the present application, the battery cells may include lithium metal secondary batteries, sodium metal batteries, or magnesium metal batteries, etc., which is not limited in embodiments of the present application. The battery cells may be cylindrical, flat or in another shape, which will not be limited by the embodiments of the present application. The battery cells are generally classified into three types depending on the way of package: cylindrical battery cells, prismatic battery cells and pouch battery cells, which are also not limited in the embodiments of the present application. In the following embodiments, for convenience of description, a lithium metal battery is taken as an example for illustration.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

With the promotion and popularization of electric vehicles, the usage of power batteries is increasing. In the core component of the power battery, the battery module, the collection of the voltage and temperature signals of the battery plays a key role in the normal operation of the battery pack.

Traditionally, voltage and temperature sampling of battery modules is performed through wiring harnesses, but the installation of wiring harnesses is cumbersome and may lead to wiring errors or mutual friction between wires, posing potential safety hazards. Therefore, sampling circuits are increasingly used in battery modules to collect the voltage, temperature, and other data of the battery.

The main body of the sampling circuit is formed by etching a copper foil to create wire loops, and then using surface mounted technology (SMT) to solder connectors and nickel tabs onto the sampling circuit body. Finally, the sampling nickel tabs are welded to the busbars to complete the conductive loop. However, currently, both the sampling nickel tabs and the sampling circuit body, as well as the sampling nickel tabs and the busbars, are welded. If a fault occurs in the sampling circuit body during assembly or use, it is not possible to disassemble and replace the sampling circuit, leading to the scrapping of the entire battery module or battery pack.

In view of the above issues, the present application provides a connecting terminal, a battery, and an electrical device that enable the convenient replacement of the sampling module after the battery module is assembled, thereby improving the assembly efficiency and utilization rate of the battery.

The connecting terminal described in the embodiments of the present application is applicable to batteries and electrical devices.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. These embodiments of the present application do not impose special restrictions on the above electrical apparatuses.

In the following embodiments, for the convenience of description, the electrical apparatus being a vehicle is taken as an example for illustration.

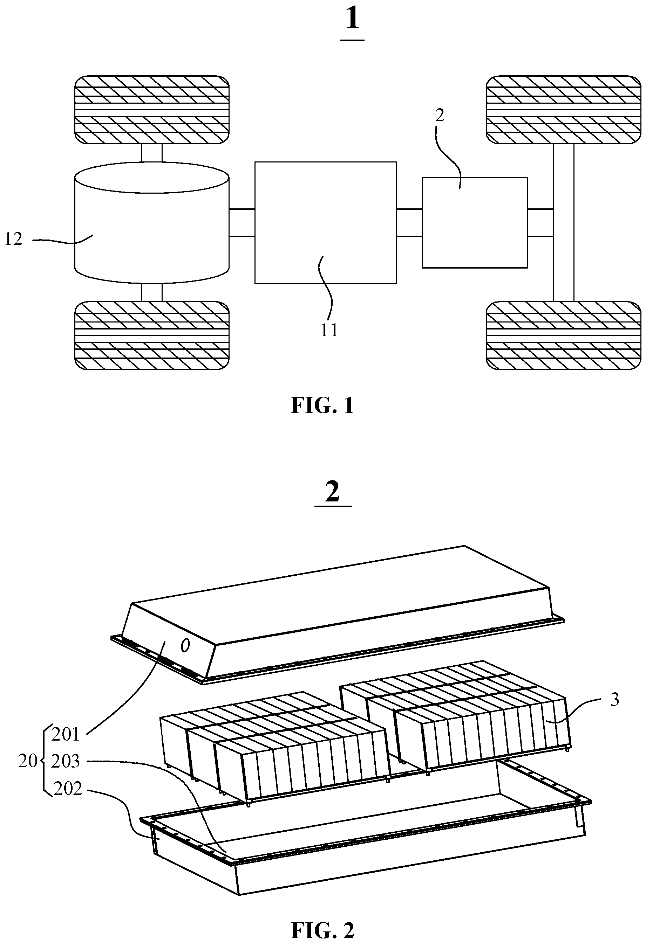

Fig. 1 is a schematic structural diagram of a vehicle 1 according to an embodiment of the present application. As shown in Fig. 1, the vehicle 1 is provided with a battery 2 therein, and the battery 2 can be provided at the bottom or head or tail portion of the vehicle 1. The battery 2 may be used to supply power to the vehicle 1. For example, the battery 2 may be used as an operating power source of the vehicle 1.

The vehicle 1 may further include a controller 11 and a motor 12, where the controller 11 is used to control the battery 2 to supply power to the motor 12, for example, for the operating power demand when the vehicle 1 is starting, navigating and driving.

In some embodiments of the present application, the battery 2 can not only be used as the operating power source of the vehicle 1, but also be used as a driving power source of the vehicle 1 to replace or partially replace fuel or natural gas to provide driving power for the vehicle 1.

Fig. 2 is a schematic exploded diagram of a battery 2 provided in an embodiment of the present application. As shown in Fig. 2, the battery 2 includes a box 20 and a battery cell 3, the battery cell 3 being accommodated within the box 20.

The box 20 is used to accommodate the battery cell 3. The box 20 may be of various configurations. In some embodiments, the box 20 may include a first box body portion 201 and a second box body portion 202, the first box body portion 201 and the second box body portion 202 covering each other and the first box body portion 201 and the second box body portion 202 together defining an accommodating space 203 for accommodating the battery cell 3. The second box body portion 202 can be of a hollow structure with one end open, the first box body portion 201 is of a plate-like structure, and the first box body portion 201 covers the open side of the second box body portion 202 to form the box 20 having the accommodating space 203; and both the first box body portion 201 and the second box body portion 202 can also be of a hollow structure with one side open, and the open side of the first box body portion 201 covers the open side of the second box body portion 202 to form the box 20 having the accommodating space 203. Of course, the first box body portion 201 and the second box body portion 202 can be of various shapes, such as a cylinder or a cuboid.

To improve the sealability of the first box body portion 201 and the second box body portion 202 after they are connected, a sealing member, such as a sealant, a seal ring, etc., may also be provided between the first box body portion 201 and the second box body portion 202.

Assuming that the first box body portion 201 covers the top of the second box body portion 202, and the first box body portion 201 can also be called an upper box cover, and the second box body portion 202 can also be called a lower box body.

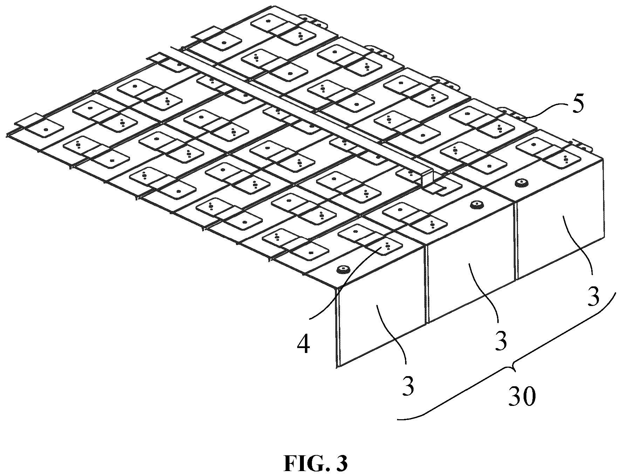

Fig. 3 is a schematic structural diagram of a battery according to another embodiment of the present application. As shown in Fig. 3, there are multiple battery cells 3 in the battery 2. The multiple battery cells 3 can be in series or parallel or parallel-series connections with each other, where the parallel-series connection means that there are both series and parallel connections among the multiple battery cells 3. The multiple battery cells 3 can be directly connected together in series or in parallel or in parallel-series connection, and then the whole composed of the multiple battery cells 3 can be accommodated in the box 20. Of course, the multiple battery cells 3 can be connected in series or in parallel or in parallel-series connection to form a battery module 30 first, then multiple battery modules 30 can be connected in series or in parallel or in parallel-series connection to form a whole, and accommodated in the box 20. The multiple battery cells 3 in the battery module 30 can be electrically connected to each other via a busbar 4 to realize the parallel or series connection or parallel-series connection of the multiple battery cells 3 in the battery module 30. Additionally, the sampling circuit 5 in the figure is used to collect the voltage, temperature, etc., of each battery cell 3.

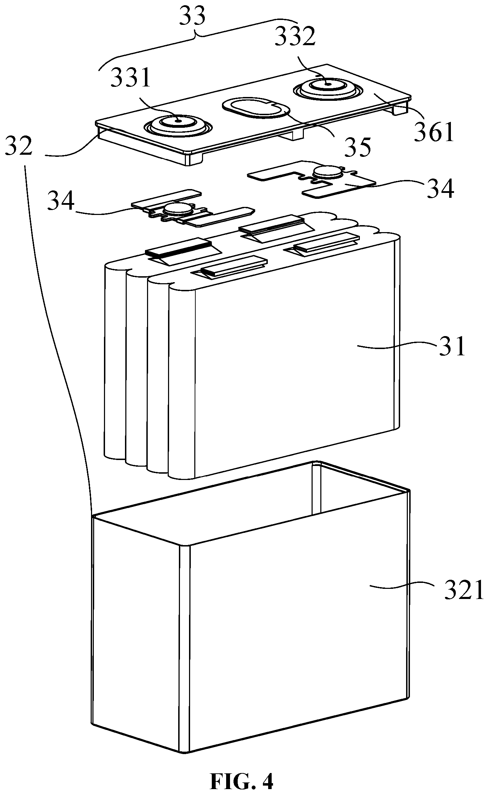

As shown in Fig. 4, which is a schematic structural diagram of a battery cell 3 according to an embodiment of the present application, the battery cell 3 includes one or more electrode assemblies 31, a case 321, and an end cover 361. The case 321 and the end cover 361 form a shell or battery case 32. The walls of the case 321 and the end cover 361 are both referred to as the walls of the battery cell 3. For a rectangular battery cell 3, the walls of the case 321 include a bottom wall and four side walls. The case 321 is determined based on the shape of one or more electrode assemblies 31 combined together. For example, the case 321 can be a hollow rectangular prism, cube, or cylinder, and one of the faces of the case 321 has an opening to allow the one or more electrode assemblies 31 to be placed inside the case 321. For example, when the case 321 is a hollow rectangular prism or cube, one of the flat faces of the case 321 serves as the opening face, meaning that this flat face does not have a wall body, allowing the interior and exterior of the case 321 to communicate with each other. When the case 321 is a hollow cylinder, one of the end faces of the case 321 serves as the opening face, meaning that this end face does not have a wall body, allowing the interior and exterior of the case 321 to communicate with each other. The end cover 361 covers the opening and is connected to the case 321 to form a sealed cavity for placing the electrode assembly 31. The case 321 is filled with an electrolyte, such as an electrolyte solution.

The battery cell 3 may further include two electrode terminals 33, and the two electrode terminals 33 may be provided on the end cover 361. The end cover 361 is generally in the shape of a flat plate, and the two electrode terminals 33 are fixed on a flat plate surface of the end cover 361. The two electrode terminals 33 are a positive electrode terminal 331 and a negative electrode terminal 332, respectively. Each electrode terminal 33 is correspondingly provided with a connecting member 34, also referred to as a current collecting member 34, which is located between the end cover 316 and the electrode assembly 31 and used to electrically connect the electrode assembly 31 to the electrode terminal 33.

In this battery cell 3, according to actual use requirements, there may be a single or multiple electrode assemblies 31. As shown in Fig. 4, there are 4 separate electrode assemblies 31 in the battery cell 3.

A pressure relief mechanism 35 may also be provided on the battery cell 3. The pressure relief mechanism 35 is used, when an internal pressure or temperature of the battery cell 3 reaches a threshold, to be actuated to relieve the internal pressure or heat.

The pressure relief mechanism 35 may have various possible pressure relief structures, which is not limited in the embodiments of the present application. For example, the pressure relief mechanism 35 may be a temperature-sensitive pressure relief mechanism, and the temperature-sensitive pressure relief mechanism is configured to be capable of being melt when the internal temperature of the battery cell 3 provided with the pressure relief mechanism 35 reaches a threshold; and/or the pressure relief mechanism 35 may be a pressure-sensitive pressure relief mechanism, and the pressure-sensitive pressure relief mechanism is configured to be capable of being ruptured when the internal air pressure of the battery cell 3 provided with the pressure relief mechanism 35 reaches a threshold.

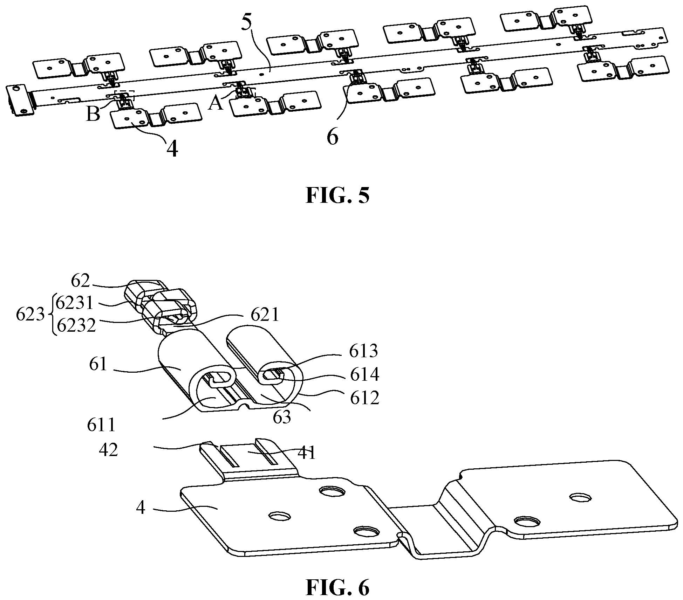

Fig. 5 is a schematic structural diagram of a connecting terminal according to an embodiment of the present application, and Fig. 6 is a schematic structural diagram of a connecting terminal according to another embodiment of the present application. As shown in Figs. 5 and 6, the connecting terminal 6 is used for connecting a sampling circuit 5 and a busbar 4, including: a first connecting portion 61 including a snap-fit structure, the snap-fit structure being used for snap-fit connection with the busbar 4; and a second connecting portion 62 connected to the first connecting portion 61, the second connecting portion 62 being electrically connected to the sampling circuit 5.

The busbar 4, also known as the bus, busbar strip, etc., is generally used to connect multiple electrical circuits.

The sampling circuit 5 is a printed circuit made from polyester film or polyimide as the substrate, which has high reliability and excellent flexibility. By embedding circuit designs onto a bendable, lightweight and thin plastic sheet, it is made possible for the integration of a large number of precision components in narrow and limited spaces, thereby forming a flexible circuit that can be bent. This type of circuit can be freely bent and folded, is lightweight, compact, has good heat dissipation, and is easy to install.

In the embodiments of the present application, the sampling circuit 5 may be made from the above flexible material that can be freely bent, or it may be made from a relatively hard material. The present application does not impose limitations in this regard.

The connecting terminal 6 used to connect the busbar 4 and the sampling circuit 5 includes a first connecting portion 61 and a second connecting portion 62; furthermore, the first connecting portion 61 includes a snap-fit structure, where the first connecting portion 61 is snap-fit connected to the busbar 4 through the snap-fit structure, and the second connecting portion 62 is connected to the sampling circuit 5.

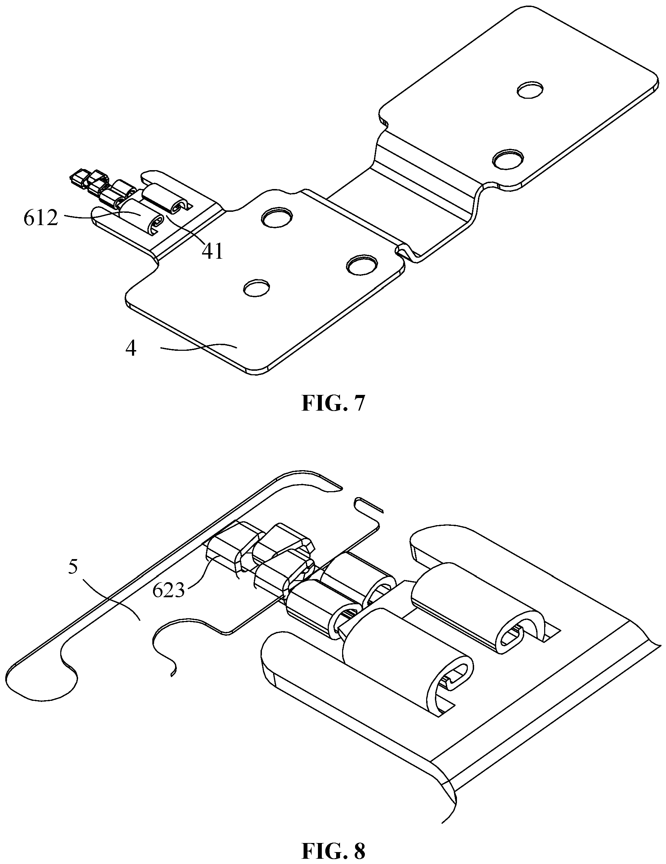

It should be understood here that the snap-fit structure snap-fits the busbar 4 to achieve the connection between the connecting terminal 6 and the busbar 4. However, in practice, the snap-fit structure only engages the portions of the busbar 4 that are intended for connection with external components. Fig. 6 is a schematic structural diagram of the connecting terminal 6 before it is connected to the busbar 4, and Fig. 7 is a schematic structural diagram of the connecting terminal 6 after it is connected to the busbar 4. As shown in Figs. 6 and 7, only the first portion 41 of the busbar 4 is snap-fit connected to the connecting terminal 6, and not the entire busbar 4 is snapped into the snap-fit structure. Since the busbar 4 may have various shapes, and for the sake of uniformity in description, the busbar 4 and the first portion 41 of the busbar 4 will not be described separately hereinafter.

In the above solution, by providing a snap-fit structure on the first connecting portion 61 of the connecting terminal 6, and connecting the first connecting portion 61 to the busbar 4 through the snap-fit structure, the sampling circuit 5 is connected to the busbar 4. This connection method is convenient for assembly and disassembly, which is beneficial to improving the battery assembly efficiency. Additionally, when the sampling circuit 5 malfunctions and needs to be replaced, it can be replaced by simply pulling the connecting terminal 6 out of the busbar 4, thereby avoiding waste of battery modules.

In some embodiments, the snap-fit structure includes a first main body portion 611 and first bending portions 612 on both sides of the first main body portion 611, the first bending portions 612 on both sides being bent toward the first main body portion 611 to form a snap-fit groove 63, with the snap-fit groove 63 being used to snap-fit with the busbar 4.

The first connecting portion 61 uses the snap-fit structure to successfully connect the connecting terminal 6 to the busbar 4. The snap-fit structure includes a first main body portion 611 and first bending portions 612, where the first bending portions 612 are respectively provided on both sides of the first main body portion 611, the first bending portions 612 on both sides being bent toward the first main body portion 611 to form a snap-fit groove 63 to snap-fit with the busbar 4.

In the above solution, by providing a first main body portion 611 and first bending portions 612 on both sides of the first main body portion 611, and bending the first bending portions 612 on both sides toward the first main body portion 611 to form a snap-fit groove 63, where the snap-fit groove 63 can snap-fit with the busbar 4, the connecting terminal 6 is successfully connected to the busbar 4.

In some embodiments, the snap-fit structure further includes two second bending portions 613 respectively connected to the first bending portions 612 on both sides, the second bending portions 613 being bent inwardly toward the snap-fit groove 63 and bent toward the first bending portions 612 to form first abutting portions 614, where the first abutting portions 614 are used to abut against a surface of the busbar 4 that faces away from the first main body portion 611.

The first main body portion 611 and the first bending portions 612 located on both sides of the first main body portion 611 together form the snap-fit groove 63 to snap-fit the busbar 4. However, during the transportation of the battery 2, simply snap-fitting the busbar 4 into the snap-fit groove 63 cannot ensure a stable connection between the busbar 4 and the connecting terminal 6.

In the above solution, the snap-fit structure is provided with two second bending portions 613, the two second bending portions 613 being respectively bent toward the first bending portions 612 on both sides to form first abutting portions 614, where the first abutting portions 614 abut against a surface of the busbar 4 that faces away from the first main body portion 611, thereby providing elastic support to the busbar 4. This can enhance the securing effect of the busbar 4 with the first connecting portion 61.

In the embodiments of the present application, in order to increase the abutting strength of the first abutting portion 614, a tail portion can be additionally provided at the end of the first abutting portion 614, as shown in Fig. 6. The tail portion may be arranged either perpendicular to the first abutting portion 614 or at a certain angle, which is not limited in the present application. In this way, when the first abutting portion 614 abuts against the portion of the busbar 4 that is snapped into the snap-fit groove 63, the tail portion can abut against the first bending portion 612, thereby transferring the force exerted by the busbar 4 on the first abutting portion 614 to the first bending portion 612. This prevents damage to the first abutting portion 614 when the busbar 4 applies a relatively strong force to the first abutting portion 614. The tail portion is oriented toward the first bending portion 612, that is, away from the first main body portion 611. The size of the tail portion can be adaptively adjusted based on the distance between the first abutting portion 614 and the first bending portion 612. The present application does not impose any limitations in this regard.

In some embodiments, a second abutting portion 615 is provided on the first main body portion 611, the second abutting portion 615 protruding from the first main body portion 611 and the second abutting portion 615 being used to abut against a surface of the busbar 4 that is close to the first main body portion 611.

As previously described, the first main body portion 611 and the first bending portion 612 on each side of the first main body portion 611 jointly define the snap-fit groove 63 for snap-fitting the busbar 4. To enhance the connection effect between the busbar 4 and the connecting terminal 6, the snap-fit structure is further provided with second bending portions 613. The second bending portions 613 form the first abutting portions 614, the first abutting portions 614 abutting against the surface of the busbar 4 that faces away from the first main body portion 611. If an abutting component is also provided on the surface of the busbar 4 that is close to the first main body portion 611, the fixing effect of the connecting terminal 6 on the busbar 4 can be further enhanced.

In the above solution, the second abutting portion 615 is provided on the first main body portion 611, the second abutting portion 615 protruding from the first main body portion 611 and abutting against the surface of the busbar 4 that is close to the first main body portion 611. In this way, the first abutting portion 614 and the second abutting portion 615 cooperate to stably secure the busbar 4 within the snap-fit groove 63, even during the transportation of the battery 2.

In some embodiments, in a first direction X, the distance between the first abutting portion 614 and the second abutting portion 615 is 50% to 90% of the thickness of the busbar 4, the first direction X being perpendicular to a plane in which the first main body portion 611 is located.

To facilitate the convenient connection between the connecting terminal 6 and the busbar 4, the snap-fit groove 63 is provided in the first connecting portion 61. In this way, when the busbar 4 is snapped into the snap-fit groove 63, it can be connected to the connecting terminal 6. In order to enhance the connection effect between the connecting terminal 6 and the busbar 4, the first connecting portion 61 is provided with the first abutting portions 614 and the second abutting portion 615 that respectively abut against two different surfaces of the busbar 4. However, if the thickness of the busbar 4 does not match the thickness that the snap-fit groove 63 can accommodate, the two cannot achieve a stable connection.

It should be noted that the present application limits the distance between the first abutting portion 614 and the second abutting portion 615 to 50%-90% of the thickness of the busbar 4. This distance refers to the distance between the first abutting portion 614 and the second abutting portion 615 before the connecting terminal 6 is snap-fitted with the busbar 4.

In the above solution, by setting the distance between the first abutting portion 614 and the second abutting portion 615 to be 50% to 90% of the thickness of the busbar 4, the space between the first abutting portion 614 and the second abutting portion 615 that is used to accommodate the busbar 4 is smaller than the busbar 4, so that when the busbar 4 is snapped into the snap-fit groove 63, a preload force is applied to the busbar 4, thereby achieving a stable connection between the busbar 4 and the connecting terminal 6.

In some embodiments, the second abutting portion 615 is located in the middle of the first main body portion 611.

The first abutting portions 614 are formed by the second bending portions 613 on both sides being bent toward the two respective first bending portions 612, which means that there are two first abutting portions 614. The two first abutting portions 614 respectively abut against the two sides of the surface of the busbar 4 that is away from the first main body portion 611. In contrast, when there is only one second abutting portion 615, it is necessary to determine how to arrange the position of the second abutting portion 615 on the first main body portion 611 from the perspective of achieving better abutment with the busbar 4.

In the above solution, by positioning the second abutting portion 615 at the middle of the first main body portion 611, the second abutting portion 615 located at the middle of the first main body portion 611 cooperates with the two first abutting portions 614, thereby achieving balanced securing of the entire busbar 4.

In the embodiments of the present application, there may be one or more second abutting portions 615. When there are two second abutting portions 615, the second abutting portions 615 can be arranged opposite to the first abutting portions 614. The above is only an example, but the present application does not impose any particular limitations on the number and the position of the second abutting portion 615.

In some embodiments, in the first direction X, the second abutting portion 615 protrudes from the first main body portion 611 by 0.5 to 1 mm.

To enhance the fixing effect on the busbar 4, the second abutting portion 615 that protrudes from the first main body portion 611 is provided on the first main body portion 611. With the appropriate protrusion of the second abutting portion 615, it can abut against the busbar 4 to achieve a stable connection with the busbar 4.

In the above solution, to stabilize the connection effect between the busbar 4 and the connecting terminal 6, the second abutting portion 615 is provided on the first main body portion 611. However, as the protrusion height of the second abutting portion 615 increases, the difficulty in manufacturing the second abutting portion 615 also increases. By setting the height of the protrusion of the second abutting portion 615 from the first main body portion 611 to 0.5 to 1 mm, the second abutting portion 615 not only provides a good elastic securing function but also has relatively low manufacturing difficulty.

In addition, the second abutting portion 615 may be in a semicircular shape as shown in Fig. 6, or it may take other shapes, as long as the second abutting portion 615 can provide a certain degree of elastic support to the busbar 4. The present application does not impose limitations in this regard.

In some embodiments, when the busbar 4 is snap-fitted with the snap-fit groove 63, the first bending portions 612 are snapped into openings 41 of the busbar 4.

When the busbar 4 is connected to the connecting terminal 6 as shown in Fig. 7, the connection between the busbar 4 and the connecting terminal 6 is actually the first portion 41 of the busbar 4 being snapped into the snap-fit groove 63 of the connecting terminal 6. In the busbar 4 as shown in Fig. 7, the first portion 41 has openings 42 with the other portions on both sides. In this case, if the first bending portion 612 is snapped into the openings 42 (not shown in Fig. 7), the securing effect between the connecting terminal 6 and the busbar 4 can be further enhanced.

In the above solution, when snap-fitting the busbar 4 with the snap-fit groove 63, by snapping the first bending portions 612 into the openings 42 of the busbar 4, the first connecting portion 61 and the busbar 4 are snap-fitted and secured with each other, thereby achieving a more secure connection between the two.

In some embodiments, the second connecting portion 62 includes a second main body portion 621 and a crimping portion 622, the second main body portion 621 being connected to the first main body portion 611, and the crimping portion 622 being used for electrical connection with the sampling circuit 5.

To achieve the connection between the busbar 4 and the sampling circuit 5, one end of the connecting terminal 6, namely the first connecting portion 61, needs to be connected to the busbar 4, while the other end needs to be connected to the sampling circuit 5.

In the above solution, by providing the second connecting portion 62, and making the second connecting portion 62 include the second main body portion 621 and the crimping portion 622, where the second main body portion 621 is connected to the first main body portion 611, making the connecting terminal 6 a unified whole; and the crimping portion 622 is used for electrical connection with the sampling circuit 5, the sampling circuit 5 to is successfully connected to the busbar 4.

In the embodiments of the present application, the connecting terminal 6 can be manufactured by separately producing the first connecting portion 61 and the second connecting portion 62 and then assembling them together, or it can be integrally molded. The present application does not impose any limitations on the manufacturing process of the connecting terminal 6.

In some embodiments, the crimping portion 622 includes first sub-crimping portions 623, the first sub-crimping portion 623 including a joint portion 6231 and a tip portion 6232, where the tip portion 6232 is connected to the second main body portion 621 through the joint portion 6231, and the tip portion 6232 is used to pierce the sampling circuit 5 and bend to electrically connect with the sampling circuit 5.

Pierce-crimping refers to a connection method in which a certain amount of pressure is applied to the component intended for pierce-crimping, such as the tip portion 6232 in the present application, causing the component to be embedded into the pierced component to establish a connection. This method is suitable for materials with relatively soft textures. Fig. 8 is a schematic diagram of partial details corresponding to position B in Fig. 5. As shown in Fig. 8, when the sampling circuit 5 with a relatively soft texture is connected to the connecting terminal, the tip portion 6232 pierces the sampling circuit 5 and is connected to the sampling circuit 5.

The crimping portion 622 is used for electrical connection with the sampling circuit 5, and the crimping portion 622 includes first sub-crimping portions 623. When the sampling circuit 5 has a relatively soft texture, the tip portion 6232 in the first sub-crimping portion 622 can pierce the sampling circuit 5 and then bend within the sampling circuit 5 to be fixed and electrically connected with the sampling circuit 5.

In the above solution, by providing first sub-crimping portions 623 within the crimping portion 622 and making the first sub-crimping portion 623 include a joint portion 6231 and a tip portion 6232, where the joint portion 6231 is used to connect the tip portion 6232 and the second main body portion 621, and the tip portion 6232 is used to be pierce-connected to the sampling circuit 5, the electrical connection between the connecting terminal 6 and the sampling circuit 5 is achieved.

In some embodiments, the first sub-crimping portions 623 are located on both sides of the second main body portion 621.

The first sub-crimping portions 623 achieve a fixed connection with the sampling circuit 5 by piercing the sampling circuit 5 and then bending. If the first sub-crimping portions 623 are only provided on one side of the second main body portion 621, the first sub-crimping portions 623 can only pierce and crimp the sampling circuit 5 from one side.

In the above solution, by positioning the first sub-crimping portions 623 on both sides of the second main body portion 621, the fixed connection between the first sub-crimping portions 623 and the sampling circuit 5 can be strengthened.

In some embodiments, the number of the first sub-crimping portions 623 is not less than 3.

To enhance the connection effect between the first sub-crimping portions 623 and the sampling circuit 5, the first sub-crimping portions 623 are located on both sides of the second main body portion 621. Additionally, appropriately increasing the number of the first sub-crimping portions 623 can also strengthen the connection effect between the sampling circuit 5 and the first sub-crimping portions 623.

In the above solution, by increasing the number of the first sub-crimping portions 623 so that the number of the first sub-crimping portions 623 is not less than 3, the connection effect between the first sub-crimping portions 623 and the sampling circuit 5 can be further enhanced.

In some embodiments, the thickness of the tip portion 6232 is 0.08 mm to 0.12 mm, and the length is 0.15 to 0.2 mm.

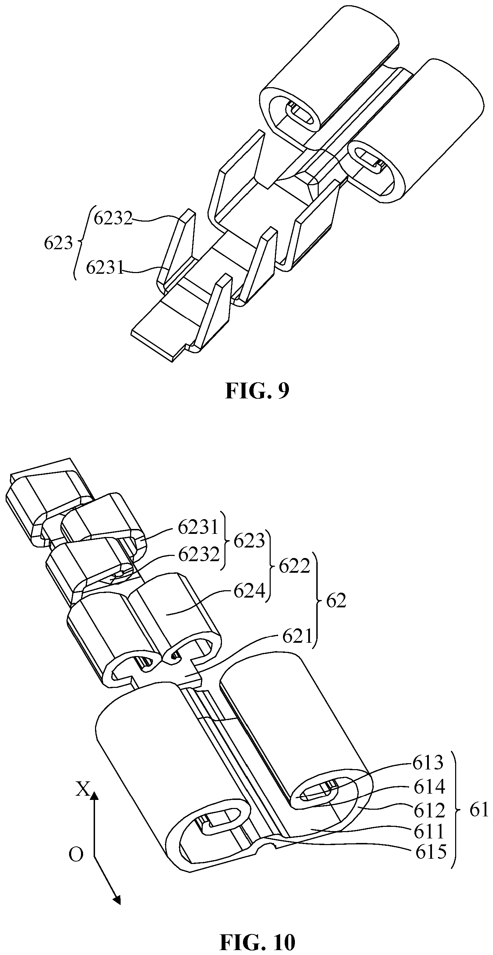

It should be noted that Fig. 8 shows the state of the tip portion 6232 after being bent. For the state of the tip portion 6232 before being connected to the sampling circuit 5, reference can be made to Fig. 9. Fig. 9 is a schematic structural diagram of a connecting terminal according to a further embodiment of the present application. As shown in Fig. 9, when the tip portion 6232 has not pierced the sampling circuit 5, the tip portion 6232 of the connecting terminal 6 is parallel to the joint portion 6231.

The tip portion 6232 of the first sub-crimping portion 623 pierces the sampling circuit 5, thereby achieving the connection. When the tip portion 6232 pierces the sampling circuit 5, the tip portion 6232 bends on the sampling circuit 5 and is fixed to the sampling circuit 5. Therefore, if the tip portion 6232 is too thick, it will be difficult for the tip portion 6232 to pierce the sampling circuit 5 and embed into the sampling circuit 5; if the tip portion 6232 is too thin, its strength will be insufficient to pierce the sampling circuit 5; and if the tip portion 6232 is too long, the connection effect between it and the second main body portion 621 will deteriorate.

In the above solution, by limiting the thickness and length of the tip portion 6232 to 0.08 mm to 0.12 mm and 0.15 to 0.2 mm, respectively, on the one hand, the connection effect between the tip portion 6232 and the joint portion 6231 can be enhanced, and on the other hand, a reliable pierce-connection between the tip portion 6232 and the sampling circuit 5 can be ensured.

In some embodiments, the thickness of the joint portion 6231 is 0.15 to 0.2 mm.

The joint portion 6231 connects the tip portion 6232 and the second main body portion 621. Therefore, the joint portion 6231 only needs to have a certain hardness to achieve the connection effect.

In the above solution, by maintaining the thickness of the joint portion 6231 at 0.15 to 0.2 mm, it can ensure that the joint portion 6231 can effectively connect the tip portion 6232 and the second main body portion 621, while also preventing waste of manufacturing materials.

In some embodiments, the distance between the tip portion 6232 after being bent and the second main body portion 621 is 0.3 to 0.5 mm, the first direction X being perpendicular to a plane in which the first main body portion 611 is located.

The tip portion 6232 is pierce-connected to the sampling circuit 5 and bends within the sampling circuit 5 to achieve a long-term fixed connection. Since the tip portion 6232 bends, it grips part of the sampling circuit 5 at the bending point. When a certain distance is maintained between the tip portion 6232 after being bent and the second main body portion 621, the tip portion 6232 can be provided with elastic supporting force.

The distance between the tip portion 6232 after being bent and the second main body portion 621 refers to the vertical distance between the two.

In the above solution, by maintaining the distance between the tip portion 6232 after being bent and the second main body portion 621 at 0.3 to 0.5 mm, the tip portion 6232 can provide a certain cushioning pressure to the sampling circuit 5. In this way, even during transportation, the stable connection between the tip portion 6232 and the sampling circuit 5 can be ensured.

Fig. 10 is a schematic structural diagram of a connecting terminal according to a further embodiment of the present application. As shown in FIG. 10, the crimping portion 622 further includes a second sub-crimping portion 624, the second sub-crimping portion 624 being connected to the second main body portion 621 and being used for crimping a wiring harness of the sampling circuit 5.

When the sampling circuit 5 is made of a rigid material, the sampling circuit 5 may have conductive wiring harnesses connected to the connecting terminal 6.

In the above scheme, by providing the second sub-crimping portions 624, with one end of the second sub-crimping portion 624 being connected to the second main body portion 621 and crimping the wire harness of the sampling circuit 5, the connection between the connecting terminal 6 and the sampling circuit 5 can be achieved.

In some embodiments, the number of the second sub-crimping portions 624 is two, the two second sub-crimping portions 624 being located on both sides of the second main body portion 621, and the two second sub-crimping portions 624 being bent toward the second main body portion 621 to crimp the wiring harness of the sampling circuit 5.

The second sub-crimping portions 624 are used to crimp the wire harness of the sampling circuit 5 to achieve electrical connection with the sampling circuit 5.

In the above solution, by providing two second sub-crimping portions 624 and positioning the two second sub-crimping portions 624 on both sides of the second main body portion 621, the connection effect between the second sub-crimping portions 624 and the sampling circuit 5 can be enhanced.

In some embodiments, in a second direction Y, the size of the connecting terminal 6 is 10 to 50 mm, the second direction Y being parallel to a plane in which the first main body portion 611 is located.

In the above solution, by maintaining the size of the connecting terminal in the second direction between 10 and 50 mm, the connecting terminal 6 can achieve the effect of connecting the sampling circuit 5 and the busbar 4 while avoiding excessively high manufacturing costs.

In some embodiments, in a second direction Y, the size of the first bending portion 612 is 5 to 20 mm, the second direction Y being parallel to a plane in which the first main body portion 611 is located.

In the above solution, by maintaining the size of the first bending portion in the second direction between 5 and 20 mm, a sufficiently long snap-fit groove can be provided to snap-fit the busbar, while avoiding excessively high manufacturing costs.

In some embodiments, in a second direction Y, the size of the joint portion 6231 is 1 to 5 mm, the second direction Y being parallel to a plane in which the first main body portion 611 is located.

In the above solution, by maintaining the size of the joint portion 6231 in the second direction Y between 1 and 5 mm, the joint portion 6231 can achieve the effect of connecting the second main body portion 621 and the tip portion 6232 while avoiding excessively high manufacturing costs.

In some embodiments, in a second direction Y, the size of the second sub-crimping portion 624 is 3 to 10 mm, the second direction Y being parallel to a plane in which the first main body portion 611 is located.

In the above solution, by maintaining the size of the second sub-crimping portion 624 in the second direction Y between 3 and 10 mm, the second sub-crimping portion 624 can achieve a stable electrical connection with the sampling circuit 5 while also preventing excessively high manufacturing costs.

In some embodiments, the material of the connecting terminal 6 is metal.

In the above solution, the metal material can provide the connecting terminal 6 with both good strength and a certain degree of flexibility.

In the embodiments of the present application, the connecting terminal 6 may be made of metal materials, such as copper, aluminum, etc., or it may be made of other materials, which is not limited in the present application.

The embodiments of the present application further provide a battery 2, including: a battery cell 3, a busbar 4, a sampling circuit 5, and a connecting terminal 6 as described in the aforementioned embodiments, where the busbar 4 connects multiple battery cells 3, and the connecting terminal 6 connects the busbar 4 and the sampling circuit 5.

An embodiment of the present application further provides an electrical device, including a battery 2 according to the above embodiments. The battery 2 is used to supply electric energy.

While the present application has been described with reference to the preferred embodiments, various modifications may be made and components thereof may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A connecting terminal for connecting a sampling circuit and a busbar, **characterized by**:
a first connecting portion comprising a snap-fit structure, the snap-fit structure being configured for snap-fit connection with the busbar; and
a second connecting portion connected to the first connecting portion, the second connecting portion being electrically connected to the sampling circuit.

2. The connecting terminal according to claim 1, wherein the snap-fit structure comprises a first main body portion and first bending portions on both sides of the first main body portion,
wherein the first bending portions on both sides are bent toward the first main body portion to form a snap-fit groove, the snap-fit groove being configured to snap-fit with the busbar.

3. The connecting terminal according to claim 2, wherein the snap-fit structure further comprises two second bending portions respectively connected to the first bending portions on both sides, the second bending portions being bent inward toward the snap-fit groove and bent toward the first bending portions to form first abutting portions, wherein the first abutting portions are configured to abut against a surface of the busbar that faces away from the first main body portion.

4. The connecting terminal according to claim 2 or 3, wherein a second abutting portion is provided on the first main body portion, the second abutting portion protruding from the first main body portion and the second abutting portion being configured to abut against a surface of the busbar that is close to the first main body portion.

5. The connecting terminal according to claim 4, wherein in a first direction, the distance between the first abutting portion and the second abutting portion is 50% to 90% of the thickness of the busbar, the first direction being perpendicular to a plane in which the first main body portion is located.

6. The connecting terminal according to any one of claims 3 to 5, wherein the second abutting portion is located at the middle of the first main body portion.

7. The connecting terminal according to claim 5 or 6, wherein in the first direction, the second abutting portion protrudes from the first main body portion by 0.5 to 1 mm.

8. The connecting terminal according to any one of claims 2 to 7, wherein when the busbar is snap-fitted with the snap-fit groove, the first bending portions are snapped into openings of the busbar.

9. The connecting terminal according to any one of claims 2 to 8, wherein the second connecting portion comprises a second main body portion and a crimping portion, the second main body portion being connected to the first main body portion, and the crimping portion being configured for electrical connection with the sampling circuit.

10. The connecting terminal according to claim 9, wherein the crimping portion comprises first sub-crimping portions, the first sub-crimping portion comprising a joint portion and a tip portion, wherein the tip portion is connected to the second main body portion through the joint portion, and the tip portion is configured to pierce the sampling circuit and bend to electrically connect with the sampling circuit.

11. The connecting terminal according to claim 10, wherein the first sub-crimping portions are located on both sides of the second main body portion.

12. The connecting terminal according to claim 10 or 11, wherein the number of the first sub-crimping portions is not less than 3.

13. The connecting terminal according to any one of claims 10 to 12, wherein the thickness of the tip portion is 0.08 mm to 0.12 mm, and the length is 0.15 to 0.2 mm.

14. The connecting terminal according to any one of claims 10 to 13, wherein the thickness of the joint portion is 0.15 to 0.2 mm.

15. The connecting terminal according to any one of claims 10 to 14, wherein in a first direction, the distance between the tip portion after being bent and the second main body portion is 0.3 to 0.5 mm, the first direction being perpendicular to a plane in which the first main body portion is located.

16. The connecting terminal according to any one of claims 10 to 15, wherein the crimping portion further comprises second sub-crimping portions, the second sub-crimping portions being connected to the second main body portion and configured to crimp a wiring harness of the sampling circuit.

17. The connecting terminal according to claim 16, wherein the number of the second sub-crimping portions is two, the two second sub-crimping portions are located on both sides of the second main body portion, and the two second sub-crimping portions are bent toward the second main body portion to crimp the wiring harness of the sampling circuit.

18. The connecting terminal according to any one of claims 2 to 17, wherein in a second direction, the size of the connecting terminal is 10 to 50 mm, the second direction being parallel to a plane in which the first main body portion is located.

19. The connecting terminal according to any one of claims 2 to 18, wherein in a second direction, the size of the first bending portion is 5 to 20 mm, the second direction being parallel to a plane in which the first main body portion is located.

20. The connecting terminal according to any one of claims 10 to 19, wherein in a second direction, the size of the joint portion is 1 to 5 mm, the second direction being parallel to a plane in which the first main body portion is located.

21. The connecting terminal according to any one of claims 16 to 20, wherein in a second direction, the size of the second sub-crimping portion is 3 to 10 mm, the second direction being parallel to a plane in which the first main body portion is located.

22. The connecting terminal according to any one of claims 1 to 21, wherein the material of the connecting terminal is metal.

23. A battery, **characterized by**:
a battery cell;
a busbar;
a sampling circuit; and
a connecting terminal according to any one of claims 1 to 22,
wherein the busbar connects multiple battery cells, and the connecting terminal connects the busbar and the sampling circuit.

24. An electrical device, **characterized by**:
a battery according to claim 23, the battery being configured to provide electrical energy.
